(19) Europäisches Patentamt / European Patent Office / Office européen des brevets

(11) **EP 3 621 804 B1**

(12) **EUROPÄISCHE PATENTSCHRIFT**

(45) Veröffentlichungstag und Bekanntmachung des Hinweises auf die Patenterteilung:
**29.05.2024   Patentblatt 2024/22**

(21) Anmeldenummer: **18718444.5**

(22) Anmeldetag: **18.04.2018**

(51) Internationale Patentklassifikation (IPC):
**B32B 17/10** (2006.01)   **G02B 27/01** (2006.01)

(52) Gemeinsame Patentklassifikation (CPC):
**B32B 17/10761; B32B 17/10036; B32B 17/10568; B32B 17/10981;** G02B 27/01

(86) Internationale Anmeldenummer:
**PCT/EP2018/059805**

(87) Internationale Veröffentlichungsnummer:
**WO 2018/206245 (15.11.2018 Gazette 2018/46)**

(54) **VERFAHREN ZUR HERSTELLUNG EINER THERMOPLASTISCHEN KOMBINATIONSFOLIE**

METHOD FOR MAKING A THERMOPLASTIC COMBINATION FILM

PROCÉDÉ DE FABRICATION D'UNE FEUILLE COMPOSITE THERMOPLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Validierungsstaaten:
**MA**

(30) Priorität: **11.05.2017   EP 17170606**

(43) Veröffentlichungstag der Anmeldung:
**18.03.2020   Patentblatt 2020/12**

(73) Patentinhaber: **SAINT-GOBAIN GLASS FRANCE**
**92400 Courbevoie (FR)**

(72) Erfinder:
• **ARNDT, Martin**
**52066 Aachen (DE)**
• **CAPPUCCILLI, Michele**
**52156 Monschau (DE)**
• **VON AVENARIUS, Wolfgang**
**52134 Herzogenrath (DE)**

(74) Vertreter: **Gebauer, Dieter Edmund**
**Splanemann Patentanwälte mbB**
**Rumfordstraße 7**
**80469 München (DE)**

(56) Entgegenhaltungen:
**EP-A1- 1 593 656       EP-A1- 2 883 693**
**US-A1- 2007 009 714    US-A1- 2016 168 353**

• **DATABASE WPI Week 201132 6. Mai 2011 (2011-05-06) Thomson Scientific, London, GB; AN 2011-E78956 XP002773814, -& JP 2011 088801 A (NIPPON SHEET GLASS CO LTD) 6. Mai 2011 (2011-05-06)**
• **DATABASE WPI Week 200915 19. Februar 2009 (2009-02-19) Thomson Scientific, London, GB; AN 2009-F15721 XP002773815, -& JP 2009 035444 A (NIPPON SHEET GLASS CO LTD) 19. Februar 2009 (2009-02-19)**
• **DATABASE WPI Week 200103 4. Juli 2000 (2000-07-04) Thomson Scientific, London, GB; AN 2001-018739 XP002773816, -& JP 2000 187181 A (CENTRAL GLASS CO LTD) 4. Juli 2000 (2000-07-04)**

**Beschreibung**

Die Erfindung betrifft ein Verfahren zur Herstellung einer thermoplastischen Kombinationsfolie geeignet für eine Verbundglasscheibe.

Verbundglasscheiben werden heute an vielen Orten, insbesondere im Fahrzeugbau, verwendet. Dabei ist der Begriff Fahrzeug weit gefasst und betrifft unter anderem Straßenfahrzeuge, Flugzeuge, Schiffe, landwirtschaftliche Maschinen oder auch Arbeitsgeräte.

Auch in anderen Bereichen werden Verbundglasscheiben verwendet. Hierzu zählen beispielsweise Gebäude-Verglasungen als auch Informationsdisplays, z.B. in Museen oder als Werbedisplays.

Dabei weist eine Verbundglasscheibe im Allgemeinen zwei Glasflächen auf, die auf eine Zwischenschicht laminiert sind. Die Glasflächen selbst können eine Krümmung aufweisen und sind in aller Regel von konstanter Dicke. Die Zwischenschicht weist in aller Regel ein thermoplastisches Material, in aller Regel Polyvinylbutyral (PVB), einer vorbestimmten Dicke, z.B. 0,76 mm, auf.

Da die Verbundglasscheibe im Allgemeinen in Bezug auf einen Betrachter geneigt ist, kommt es zu Doppelbildern. Diese Doppelbilder sind dadurch bedingt, dass einfallendes Licht in aller Regel nicht vollständig durch beide Glasflächen tritt, sondern dass zumindest ein Teil des Lichtes erst reflektiert wird und erst danach durch die zweite Glasfläche tritt.

Diese Doppelbilder sind insbesondere bei Dunkelheit wahrnehmbar, insbesondere bei starken einstrahlenden Lichtquellen, wie z.B. die Scheinwerfer eines entgegenkommenden Fahrzeugs.

Diese Doppelbilder sind extrem störend. Insbesondere im Bereich von Kamerafenstern führen diese Doppelbilder zu Fehlinformationen. Kamerafenster sind Bereiche einer Scheibe, hinter denen eine Kamera angebracht ist, die Bilder von der Umgebung aufzeichnet. Solche Kamerafenster gewinnen zum Beispiel im Bereich des autonomen Fahrens an Bedeutung.

Häufig wird die Verbundglasscheibe auch als Head-Up-Display (HUD) zur Anzeige von Informationen verwendet. Dabei wird mittels einer Projektionseinrichtung ein Bild auf die Verbundglasscheibe projiziert, um dem Betrachter eine Information ins Sichtfeld einzublenden. Im Fahrzeugbereich wird die Projektionseinrichtung z.B. auf dem Armaturenbrett angeordnet, sodass das projizierte Bild auf der nächstliegenden Glasfläche der zum Betrachter geneigten Verbundglasscheibe in Richtung des Betrachters reflektiert wird.

Wiederum tritt ein Teil des Lichtes jedoch in die Verbundglasscheibe ein und wird nun z.B. an der inneren Grenzschicht der vom Betrachter aus gesehen weiter außen liegenden Glasfläche und der Zwischenschicht reflektiert und tritt versetzt anschließend aus der Verbundglasscheibe aus. Auch hier tritt ein ähnlicher Effekt, der Effekt der Geisterbilder, in Bezug auf das darzustellende Bild auf.

Eine rein klassische Kompensation von Geisterbildern mithilfe einer Keilfolie mit unveränderlichem Keilwinkel führt dazu, dass eine Überkompensation für Doppelbilder in Transmission zu beobachten ist. Dies führt dazu, dass der jeweilige Betrachter irritiert wird oder im schlimmsten Fall eine Fehlinformation erhält. Bislang wird versucht, dieses Problem dadurch zu lösen, dass die Oberflächen der Scheiben nicht mehr parallel, sondern in einem festen Winkel angeordnet werden. Dies wird zum Beispiel dadurch erreicht, dass die Zwischenschicht eine linear ansteigende und / oder abnehmende Dicke aufweist. Im Fahrzeugbau wird typischerweise die Dicke so variiert, dass am unteren Ende der Verbundglasscheibe hin zum Motorraum die kleinste Dicke vorgesehen ist, während die Dicke zum Dach hin ansteigt; das heißt die Zwischenschicht weist eine Keilform auf.

Verbundglasscheiben dieser Art mit keilförmiger Zwischenschicht und die optischen Gesetze, auf denen sie beruhen, sind an sich bekannt und werden beispielsweise in den internationalen Patentanmeldungen WO 2015/086234 A1, WO 2015/086233 A1 und WO 2009/071135 A1, den amerikanischen Patenten US 8,451,541 B2, US 7,060,343 B2, US 6,881,472 B2, US 6,636,370 B2 und US 5,013,134 oder den deutschen Offenlegungsschriften DE 196 11 483 A1 und DE 195 35 053 A1 beschrieben.

Der erforderliche Keilwinkelverlauf und das daraus resultierende Dickenprofil der Zwischenschicht muss für jede Scheibenform gesondert berechnet werden. Bislang wird das erfindungsgemäße Dickenprofil durch Verwendung einer entsprechenden Schlitzdüse bei der Extrusion der Folie, oder aber durch gezieltes Recken der mit einem entsprechenden Temperaturprofil aufgeheizten Folie erreicht. Diese Methoden können auch kombiniert werden, indem beispielsweise das Dickenprofil in der einen Richtung durch eine entsprechende Schlitzdüse bei der Extrusion und in der anderen Richtung durch nachträgliches entsprechendes Recken der Folie erzeugt wird. Bei dieser Art der Herstellung treten jedoch Probleme auf.

Wenn die hergestellten Folienbahnen für die Lagerung und den Versand zu Rollen aufgewickelt werden, nehmen die Rollen eine zunehmend konische Form an, was bei der Handhabung und dem Transport der Rollen zu Schwierigkeiten führt. Um diese Schwierigkeiten zu vermeiden, ist es aus dem europäischen Patent EP 0 647 329 B1 bekannt, Folienbahnen herzustellen, die an beiden Rändern auf einer Breite von wenigstens 20 % der Bandbreite ein gleichmäßiges Dickenprofil und ein anschließendes keilförmige Dickenprofil aufweisen, das sich jeweils bis zur Mitte der Folienbahn erstreckt.

Aus der europäischen Patentschrift EP 1 063 205 B1 ist ein Verfahren zur Herstellung eines Zwischenschichtfilms für Verbundglas bekannt, bei dem man die Ausgangszusammensetzung für den Zwischenschichtfilm einer Produktionsanlage zuführt, die einen Extruder, eine Strangpressmatrize, eine erste Kühldruckwalze und eine zweite Kühldruckwalze aufweist, wobei die beiden Kühldruckwalzen jeweils eine lichte Weite haben, die entsprechend dem gewünschten Querschnittsprofil des herzustellenden Zwischenschichtfilms korrigiert wird. Bei diesem Verfahren besteht aber die Gefahr, dass der thermoplastische Kunststoff in den Kühldruckwalzen zu stark abkühlt, wodurch unbefriedigende Ergebnisse erzielt werden.

Ein weiterer Nachteil der bislang bekannten keilförmigen, thermoplastischen Kunststofffolien liegt darin, dass die Fläche des keilförmigen Profils in den HUD-Sichtfenstern sehr viel größer ist, als für eine optimale Unterdrückung der Geisterbilder notwendig ist. Zudem ist eine Herstellung mit zwei Bereichen mit unterschiedlichen Änderungen des Keilwinkels, wie es zum Beispiel für eine Anwendung in einer Verbundglasscheibe mit HUD-Bereich und Kamerafenster notwendig ist, sehr schwierig. In der europäischen Patentschrift EP 2 883 693 A1 wird vorgeschlagen, den für den HUD-Bereich vorgesehenen Abschnitt aus einer Folie auszuschneiden und dann durch einen Bereich mit keilförmigem Profil zu ersetzen. Zur Herstellung des keilförmigen Profils werden jedoch keine Vorschläge gemacht. EP 1 593 656 A1 zeigt ein Verfahren zur Herstellung eines optischen Elements durch einen Heißformgebungsprozess, wobei eine Substratfolie in ein Formwerkzeug gelegt und mithilfe des Formwerkzeugs umgeformt wird. Dieses Dokument offenbart keine Kombinationsfolie. US 2016/168353 A1 zeigt eine thermoplastische Kombinationsfolie aus mehreren Schichten, wobei eine der Schichten durch zum Beispiel Formpressen in die gewünschte Form gebracht werden kann. Ferner sind Herstellungsverfahren für einzelne Schichten erwähnt, sowie Herstellungsverfahren für Multilayerschichten, wie Coextrusion, wobei mehrere Schichten gleichzeitig hergestellt werden.

Aufgabe der Erfindung ist es, ein verbessertes Verfahren zur Herstellung einer thermoplastischen Kunststofffolie mit mindestens einem Bereich mit sich änderndem Keilwinkel bereitzustellen.

Die Aufgabe wird erfindungsgemäß durch ein Verfahren nach dem unabhängigen Anspruch 1 gelöst. Bevorzugte Ausführungsformen gehen aus den Unteransprüchen hervor.

Die Erfindung stellt ein Verfahren bereit zur Herstellung einer thermoplastischen Kombinationsfolie, die für eine Verbundglasscheibe geeignet ist. Die thermoplastische Kombinationsfolie umfasst mindestens einen festgelegten Bereich, der für ein Kamerafenster oder einen HUD-(Head-Up-Display) Bereich vorgesehen ist. Dieser festgelegte Bereich weist einen sich ändernden Keilwinkel auf. Die thermoplastische Kombinationsfolie wird durch Aneinanderfügen einer ersten thermoplastischen Folie und einer zweiten thermoplastischen Folie erhalten. Dabei wird die erste thermoplastische Folie durch ein Verfahren nach dem Stand der Technik hergestellt. Die zweite thermoplastische Folie, die einen sich ändernden Keilwinkel aufweist, wird durch Anformen an ein Formwerkzeug erhalten. Die dreidimensionale Form der zweiten thermoplastischen Folie wird dabei durch das Formwerkzeug vorgegeben. Durch die Verwendung eines Formwerkzeugs ist es möglich, ein zuvor mithilfe von Simulationswerkzeugen berechnetes Keilwinkelprofil präzise auf die zweite thermoplastische Folie zu übertragen. Dies ist besonders vorteilhaft bei komplexeren Keilwinkelprofilen, die mit herkömmlichen Methoden nicht so präzise herstellbar sind.

Der Keilwinkel ist der an einer Stelle gemessene Winkel zwischen den Oberflächen der Folie.

Die Dicke der zweiten thermoplastischen Folie ist nicht konstant, sondern ist variabel. Der Keilwinkel im festgelegten Bereich ist variabel und ändert sich abhängig vom Ort. Bevorzugt ändert sich der Keilwinkel in zwei orthogonal zueinander verlaufenden Richtungen (bidirektionaler Keil). Bei einer späteren Verwendung in einer Windschutzscheibe entsprechen die beiden Richtungen der vertikalen Richtung (von Dachkante zur Motorhaube bzw. von oben nach unten) und der horizontalen Richtung (von rechts nach links).

Mit einem in zwei Richtungen variierenden Keilwinkel können besonders effektiv Doppelbilder und Geisterbilder vermieden oder verringert werden. Der Zusammenhang zwischen Keilwinkelverläufen und der Vermeidung und Verringerung von Geisterbildern und Doppelbildern ist im Stand der Technik bekannt und wird zum Beispiel in der WO2015086234A1 und in der WO2015086233A1 beschrieben. Bevorzugt ist der optimale Keilwinkelverlauf zuvor mithilfe von Simulationswerkzeugen optimiert worden auf die Vermeidung von Doppelbildern und Geisterbildern.

Bei dem erfindungsgemäßen Verfahren erfolgen das Aneinanderfügen der beiden thermoplastischen Folien und die Herstellung der zweiten thermoplastischen Folie gleichzeitig. Die zweite thermoplastische Folie kann an die erste thermoplastische Folie angespritzt werden oder angegossen werden. Dadurch werden sichtbare Übergänge zwischen den beiden Folien vermindert und Materialunverträglichkeiten durch zusätzliche Klebstoffe vermieden.

Die erste thermoplastische Folie hat bevorzugt eine im Wesentlichen konstante Dicke. Die Dicke der ersten thermoplastischen Folie beträgt bevorzugt von 50 $\mu$m bis 2000 $\mu$m, besonders bevorzugt 300 $\mu$m - 850 $\mu$m und typischerweise 380 $\mu$m bis 760 $\mu$m. Dank des erfindungsgemäßen Verfahrens können diese vergleichsweise günstigen Folien mit einem oder mehreren festgelegten Bereichen versehen werden, in denen die Keilwinkelprofile bedarfsgerecht angepasst sind. Die erste thermoplastische Folie kann durch eine oder auch durch mehrere übereinander angeordnete, flache oder keilförmige, insbesondere flache, thermoplastische Folien ausgebildet werden.

In einer alternativen Ausführungsform hat die erste thermoplastische Folie einen konstanten Keilwinkel und hat damit eine linear ansteigende Dicke. Die Herstellung solcher Folien ist bekannt und erfolgt zum Beispiel durch Extrusion durch eine speziell angepasste Düse. Eine solche Folie, die zum Beispiel geeignet ist, um Geisterbilder im HUD-Bereich zu verringern, kann im Zuge des erfindungsgemäßen Verfahrens mit einer zweiten thermoplastischen Folie in einem Kamerafenster versehen werden, wobei der Keilwinkelverlauf der zweiten thermoplastischen Folie für die Vermeidung von Doppelbildern in Transmission optimiert ist.

Die erste thermoplastische Folie erstreckt sich bei Verwendung in einer Verbundglasscheibe über die gesamte Scheibenfläche. Die Abmessungen der ersten thermoplastischen Folie richten sich nach dem jeweiligen Verwendungszweck und der Größe der späteren Verbundglasscheibe. Vorzugsweise haben sie eine Länge von 0,25 m bis 5 m und eine Breite von 0,25 m bis 4 m.

Die zweite thermoplastische Folie umfasst mindestens den festgelegten Bereich, der für ein Kamerafenster oder HUD-Bereich vorgesehen ist. Bevorzugt erstreckt sich die zweite thermoplastische Folie nur über den festgelegten Bereich. Die Abmessungen der zweiten thermoplastischen Folie sind somit kleiner als die der ersten thermoplastischen Folie.

Die Dicke der zweiten thermoplastischen Folie an ihrer dicksten Stelle ist bevorzugt zwischen 0,10 mm und 0,25 mm und besonders bevorzugt zwischen 0,12 mm und 0,2 mm. Aufgrund dieser minimalen Dickendifferenz lassen sich hervorragend Verbundglasscheiben laminieren, ohne dass durch kritische Spannungen auftreten.

Der festgelegte Bereich für einen HUD-Bereich erstreckt sich bevorzugt über eine Fläche von 10 000 mm$^2$ bis 200 000 mm$^2$. Bevorzugt ist der HUD-Bereich bei einer Windschutzscheibe für ein Fahrzeug auf der Fahrerseite angeordnet.

Der HUD-Bereich befindet sich üblicherweise an der Fahrerseite im Durchsichtbereich der Verbundglasscheibe. Dank des erfindungsgemäßen Verfahrens zur Herstellung einer Kombinationsfolie kann leicht eine passende Folie für Rechtslenker oder Linkslenker hergestellt werden, in dem eine entsprechend optimierte zweite thermoplastische Folie an der richtigen Seite platziert wird. Mit Durchsichtbereich wird dabei der Bereich der Scheibe bezeichnet, welcher zur Durchsicht vorgesehen und geeignet ist. Der Durchsichtbereich einer Scheibe ist insbesondere transparent und weist keine opaken, bedruckten Bereiche auf, wie beispielsweise den üblichen umlaufenden Abdecksiebdruck im Randbereich. Als transparent im Sinne der Erfindung wird eine Scheibe verstanden, die eine Transmission im sichtbaren Spektralbereich >70 % aufweist.

Bevorzugt nimmt der Keilwinkel im festgelegten Bereich in der fertigen Verbundglasscheibe von unten nach oben zunächst langsam zu, um Bildverzerrungen durch einen abrupten Anstieg zu vermeiden. Anschließend nimmt der Keilwinkel in einem zentralen Bereich entsprechend eines zuvor optimierten Profils zu, um optimal die Entstehung von Geisterbildern zu unterdrücken. Daran anschließend folgt ein Bereich, in dem der Keilwinkel langsam abnimmt, um den Übergang zur ersten thermoplastischen Folie wiederum möglichst wenig sichtbar zu gestalten. Ein solcher Keilwinkelverlauf eignet sich für Kamerafenster und HUD-Bereiche.

Der festgelegte Bereich für ein Kamerafenster erstreckt sich bevorzugt über eine Fläche von 2 000 mm$^2$ - 10 000 mm$^2$. Das Kamerafenster ist bei einer Windschutzscheibe für ein Fahrzeug bevorzugt in der Nähe der Dachkante angeordnet. Dieser Bereich gehört in der Regel nicht mehr zum Durchsichtbereich. Daher sind in diesem Bereich sichtbare Übergänge zwischen erster und zweiter thermoplastischer Folie nicht störend.

In einer weiteren bevorzugten Ausführungsform umfasst die thermoplastische Kombinationsfolie mehr als einen festgelegten Bereich, bevorzugt zwei festgelegte Bereiche. Dabei ist besonders bevorzugt ein erster festgelegter Bereich als HUD-Bereich vorgesehen und befindet sich im Durchsichtbereich der Scheibe und ein zweiter festgelegter Bereich ist als Kamerafenster vorgesehen und befindet sich im oberen Drittel der Scheibe. Dank des erfindungsgemäßen Verfahrens lässt sich dies durch einfaches Hinzufügen geeigneter zweiter thermoplastischer Folien realisieren.

In einer bevorzugten Ausführungsform sind die Brechungsindizes der ersten thermoplastischen Folie und der zweiten thermoplastischen Folie gleich. Dies führt zu optisch besonders guten Ergebnissen. In einer bevorzugten Ausführungsform enthalten die erste thermoplastische Folie und die zweite thermoplastische Folie zumindest einen Stoff ausgewählt aus der Gruppe, bestehend aus Polyvinylbutyral (PVB), Ethylenvinylacetat (EVA), Polyethylenterephthalat (PET), Polyurethan (PU), Polypropylen (PP), Polyacrylat, Polyethylen (PE), Polycarbonat (PC), Polymethylmethacrylat, Polyvinylchlorid, Polyacetalharzen, Gießharzen, Polyacrylaten, fluorierten Ethylen-Propylen-Copolymerisaten, Polyvinylfluorid, Ethylen-Tetrafluorethylen-Copolymerisaten sowie Copolymeren und Gemischen. Besonders bevorzugt besteht die erste thermoplastische Folie im Wesentlichen aus PVB. Dieses ist als Zwischenschicht für Verbundglasscheiben besonders geeignet und liefert gute Ergebnisse.

In einer bevorzugten Ausführungsform bestehen die erste thermoplastische Folie und die zweite thermoplastische Folie im Wesentlichen aus dem gleichen Material. Dies vermeidet Materialunverträglichkeiten und liefert optisch besonders gute Ergebnisse.

In einer weiteren Ausführungsform der Erfindung weist mindestens die erste thermoplastische Folie eine geräuschmindernde Wirkung auf. Dadurch kann die Transmission von Geräuschen durch eine mit der Kombinationsfolie versehenen Verbundscheibe vorteilhaft verringert werden, wodurch eine Störung durch Umgebungsgeräusche und Fahrgeräusche vermindert werden kann. Eine solche Wirkung kann durch eine mehrlagige, beispielsweise dreilagige thermoplastische Folie erreicht werden, wobei die innere Lage eine höhere Plastizität oder Elastizität aufweist als die sie umgebenden äußeren Lagen, beispielsweise infolge eines höheren Anteils an Weichmachern. Dank des erfindungsgemäßen Verfahrens kann eine solche Folie mit geräuschmindernder Wirkung leicht mit einer zweiten thermoplastischen Folie kombiniert werden, sodass ein Kamerafenster oder ein HUD-Bereich integriert werden können.

In einer Ausgestaltung der Erfindung kann die thermoplastische Kombinationsfolie mindestens einen getönten Bereich aufweisen. Ein solch getönter Bereich an der oberen Kante der Scheibe ist dem Fachmann beispielsweise als "shaded band" bekannt - hierdurch kann eine Störung des Fahrers durch blendende Sonnenstrahlung vermindert werden.

Mindestens die erste thermoplastische Folie kann in einer Ausführungsform der Erfindung eine Sonnen- oder Wärmeschutzfunktion aufweisen. Beispielsweise kann die thermoplastische Folie eine reflektierende Beschichtung im Infrarot-Bereich oder IR-absorbierende Zusätze enthalten.

Gezeigt, aber in den Patentansprüchen nicht beansprucht, ist eine Verbundglasscheibe umfassend mindestens eine erste Glasscheibe/Glasschicht, eine zweite Glasscheibe/Glasschicht und eine thermoplastische Kombinationsfolie, wobei die thermoplastische Kombinationsfolie zwischen der ersten Glasscheibe/Glasschicht und der zweiten Glasscheibe/Glasschicht angeordnet ist. Die Verbundglasscheibe mit einem lokal festgelegten Bereich mit variablem Keilwinkel ist besonders stabil, da die Dickenänderung der Folie nur auf einen vergleichsweise kleinen Bereich festgelegt ist. Bei herkömmlichen Folien mit konstantem Keilwinkel ändert sich die Dicke in vertikaler und / oder horizontaler Richtung über die gesamte Scheibenhöhe und / oder Breite, was zum Auftreten von Spannungen führt. Die Dicke bei einer solchen herkömmlichen Verbundglasscheibe ist am oberen Ende größer als am unteren Ende. Dieser Dickenunterschied führt auch zu optischen Nachteilen bei einer eingebauten Scheibe, da eine dickere Scheibenkante am Übergang zur Dachkante unter Umständen hervorsteht. Bei Verwendung einer ersten thermoplastischen Folie mit konstanter Dicke ist die Dicke der erfindungsgemäßen Verbundglasscheibe an der oberen und unteren Kante gleich.

Die Gesamtdicke der Verbundglasscheibe beträgt in einer vorteilhaften Ausgestaltung von 3,5 mm bis 6,0 mm, bevorzugt von 4,0 mm bis 6,0 mm, besonders bevorzugt von 4,4 mm bis 5,6 mm. Verbundscheiben mit diesen Dicken weisen eine ausreichende mechanische Stabilität und Festigkeit auf und vorteilhafte akustische Eigenschaften hinsichtlich der Abschirmung von Umgebungsgeräuschen. Sie sind andererseits aber auch nicht zu dick und schwer, um als Windschutzscheibe typischer Fahrzeuge, insbesondere Kraftfahrzeuge einsetzbar zu sein.

Die Außenscheibe und die Innenscheibe weisen bevorzugt eine konstante Dicke auf mit im Wesentlichen planparallelen Hauptflächen und einer umlaufenden, diese verbindenden Seitenkante.

Die Dicke der Innenscheibe beträgt in einer vorteilhaften Ausgestaltung von 0,3 mm bis 3,5 mm, bevorzugt von 0,7 mm bis 2,6 mm.

Die Dicke der Außenscheibe beträgt in einer vorteilhaften Ausgestaltung mindestens 1,8 mm, bevorzugt mindestens 2,1 mm. Die Dicke der Außenscheibe beträgt bevorzugt höchstens 4,5 mm, bevorzugt höchstens 3,5 mm. Die Dicke der Außenscheibe beträgt in einer besonders vorteilhaften Ausgestaltung von 2,1 mm bis 4,5 mm, beispielsweise von 2,1 mm bis 3,5 mm oder von 2,5 bis 4,5 mm, bevorzugt von 2,5 bis 3,5 mm. In diesem Bereich weist die Verbundscheibe eine vorteilhafte mechanische Stabilität und geräuschabschirmende Eigenschaften auf, ist aber trotzdem noch hinreichend dünn und leicht, um als Windschutzscheibe eingesetzt werden zu können.

Die Außenscheibe und die Innenscheibe sind bevorzugt aus Glas gefertigt, insbesondere aus Kalk-Natron-Glas, was für Fensterscheiben üblich ist. Die Scheiben können grundsätzlich aber auch aus anderen Glasarten (beispielsweise Borsilikatglas, Quarzglas, Aluminosilikatglas) oder transparenten Kunststoffen (beispielsweise Polymethylmethacrylat oder Polycarbonat) gefertigt sein.

Die Außenscheibe und die Innenscheibe können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

Gezeigt, aber in den Patentansprüchen nicht beansprucht, ist ein Herstellungsverfahren für eine Verbundglasscheibe. Das Herstellungsverfahren weist mindestens die folgenden Schritte auf:

- Bereitstellen einer ersten Glasschicht,
- Bereitstellen einer zweiten Glasschicht,
- Auflegen einer erfindungsgemäßen thermoplastischen Kombinationsfolie auf die erste Glasschicht,
- Auflegen einer zweiten Glasschicht auf die thermoplastische Kombinationsfolie und
- Verbinden der zweiten Glasschicht mit der thermoplastischen Kombinationsfolie.

Gezeigt, aber in den Patentansprüchen nicht beansprucht, ist weiterhin eine Head-Up-Display-Anordnung, die mindestens einen Projektor zur Beleuchtung eines HUD-Bereiches einer Verbundglasscheibe und eine Verbundglasscheibe mit thermoplastischer Kombinationsfolie umfasst. Der Projektor ist dabei so angeordnet, dass er im Betrieb im Wesentlichen den festgelegten Bereich beleuchtet.

Gezeigt, aber in den Patentansprüchen nicht beansprucht, ist weiterhin eine Anordnung mit Kamera, die mindestens eine Kamera und eine Verbundglasscheibe aufweist, wobei die Kamera auf den festgelegten Bereich gerichtet ist und Lichtstrahlen aufnimmt, die durch die Verbundglasscheibe einfallen.

Gezeigt, aber in den Patentansprüchen nicht beansprucht, ist weiterhin die Verwendung einer erfindungsgemäßen Verbundglasscheibe als Frontscheibe mit Head-Up-Display und / oder Kamerafenster in Fortbewegungsmitteln zu Wasser, zu Land und zur Luft.

Ausführungsformen der vorliegenden Erfindung werden in exemplarischer Weise mit Bezug auf die angehängten Zeichnungen beschrieben, in denen zeigt:

Fig. 1    den prinzipiellen Zusammenhang der Entstehung von Doppelbildern in Transmission,

Fig. 2    den prinzipiellen Zusammenhang der Entstehung von Geisterbildern in Reflektion,

Fig. 3    einen exemplarischen Aufbau einer Verbundglasscheibe mit einer keilförmigen Zwischenschicht,

Fig. 4    einen Querschnitt durch einen Bereich einer thermoplastischen Kombinationsfolie,

Fig. 5    eine Draufsicht auf eine Verbundglasscheibe mit Kamerafenster,

Fig. 6    den prinzipiellen Aufbau einer Kamera-Anordnung,

Fig. 7    eine Draufsicht auf eine Verbundglasscheibe mit HUD-Bereich und

Fig. 8    eine schematische Darstellung eines Verfahrens, welches in den Patentansprüchen nicht beansprucht ist.

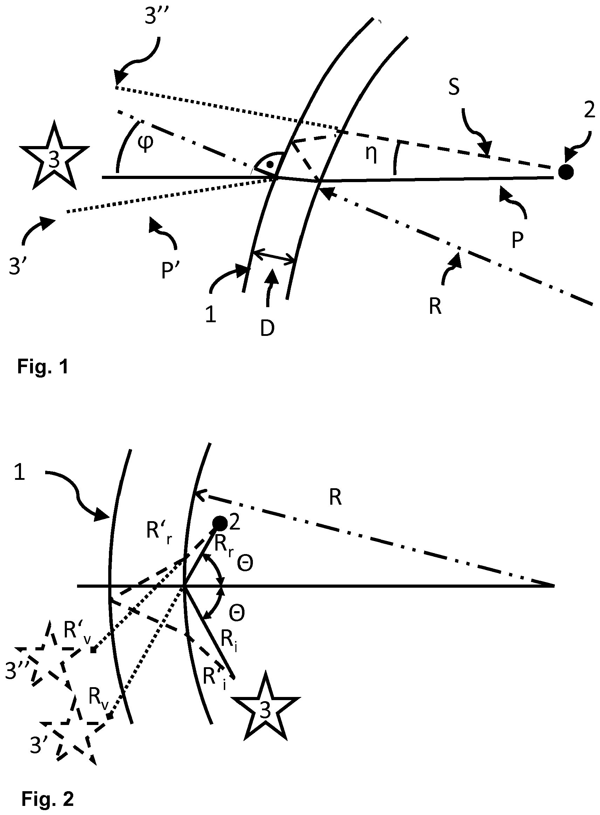

In Figur 1 ist der prinzipielle Zusammenhang der Entstehung von Doppelbildern in Transmission an Hand eines Strahlenbildes dargestellt. Dabei wird eine gebogene Scheibe 1 angenommen. Die gebogene Scheibe weist am Ort des Eintritts eines Strahles in die gebogene Glasscheibe 1 einen Krümmungsradius (R+D) auf. Von einer Lichtquelle 3 wird nun Licht ausgestrahlt. Dieses Licht trifft auf die Scheibe und wird gemäß den bekannten Brechungsgesetzen beim Übergang von Luft zu Glas an der ersten Grenzfläche und von Glas zu Luft an der zweiten Grenzfläche gebrochen und trifft in das Auge 2 eines Betrachters. Dieser Strahl ist als durchgezogene Linie P dargestellt. Aus der Sicht des Betrachters scheint die Lichtquelle 3 am Ort 3' befindlich zu sein. Dies ist als Strahl P' dargestellt. Neben diesem als Primärstrahl bezeichneten Strahl P wird jedoch an der zweiten Grenzfläche Glas/Luft der Strahl nur teilweise in der oben beschriebenen Weise gebrochen; ein kleinerer Anteil wird an der zweiten Grenzfläche reflektiert und wird nochmals an der ersten Grenzfläche ein weiteres Mal reflektiert bevor der Strahl nun durch die zweite Grenzfläche tritt und in das Auge 2 des Betrachters trifft. Dieser Strahl, der sogenannte Sekundärstrahl, ist als gestrichelte Linie S dargestellt. Aus der Sicht des Betrachters scheint die Lichtquelle 3 auch am Ort 3" befindlich zu sein. Der von dem Primärstrahl P' und dem Sekundärstrahl S eingeschlossene Winkel η ist der so genannte Doppelbildwinkel.

Um diesem Doppelbild zu begegnen, kann nun vorgesehen sein, dass ein Keilwinkel zwischen den zwei in Figur 1 im Wesentlichen parallel angenommen Grenzschichten vorgesehen wird.

Nach J. P. Aclocque "Doppelbilder als störender optischer Fehler der Windschutzscheibe" in Z. Glastechn. Ber. 193 (1970) S. 193-198 lässt sich der Doppelbildwinkel in Abhängigkeit von dem Biegeradius der Glas-Scheibe und dem Einfallswinkel des Lichtstrahls nach folgender Beziehung berechnen:

$$\eta = \frac{2d}{R} \cdot \frac{\sin \varphi}{\sqrt{n^2 - \sin^2 \varphi}},$$

wobei

η den Doppelbildwinkel, n den Brechungsindex des Glases, d die Dicke der Glas-Scheibe, R den Biegeradius der Glas-Scheibe am Ort des einfallenden Lichtstrahls, und φ den Einfallswinkel des Lichtstrahls zur Normalen auf die Tangente zur Scheibe bezeichnen.

Bei ebenen Glas-Scheiben ist der Doppelbildwinkel η gemäß

$$\eta = 2 \cdot \delta \cdot \frac{\sqrt{n^2 - \sin^2 \varphi}}{\cos \varphi}$$

abhängig von dem durch die Glasoberflächen gebildeten Keilwinkel δ.

Somit kann durch Gleichsetzung der zuvor genannten Formeln der notwendige Keilwinkel für die Eliminierung des Doppelbildes berechnet werden:

$$\delta = \frac{d}{R} \cdot \frac{\cos \varphi \cdot \sin \varphi}{n^2 - \sin^2 \varphi}.$$

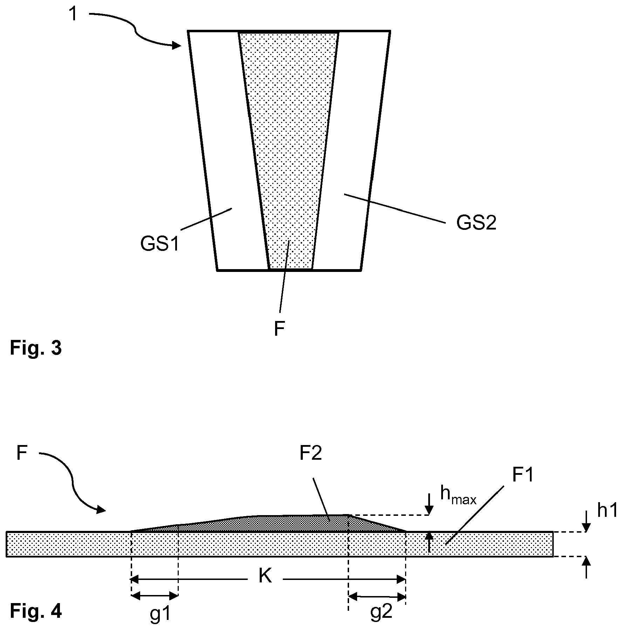

In aller Regel wird dieser Keilwinkel dadurch realisiert, dass bei Verbundglasscheiben 1 eine keilförmige Zwischenschicht F zwischen eine erste Glasschicht $GS_1$ und eine zweite Glasschicht $GS_2$ eingelegt wird, siehe Figur 3. Dabei kann in aller Regel vereinfachend davon ausgegangen werden, dass der Brechungsindex n konstant ist, da der Unterschied des Brechungsindex der Zwischenschicht F und den Glasschichten $GS_1$, $GS_2$ eher gering ist, sodass durch den geringen Unterschied kaum eine Wirkung ausgeht.

Auch bei gebogenen Windschutzscheiben kann diese Idee angewendet werden. In aller Regel werden hierzu vereinfachend der Einfallswinkel und der Biegeradius für einen Referenzaugpunkt angenommen, und der damit ermittelte Keilwinkel für die gesamte Windschutzscheibe angewendet.

Bei großen Verbundglasscheiben 1, sogenannten Panoramascheiben, und/oder stärker gebogenen Verbundglasscheiben 1 ist diese Herangehensweise jedoch nicht mehr ausreichend, sodass hier in aller Regel ein in vertikaler Richtung sich ändernder Keilwinkelverlauf zu bestimmen ist.

Dann kann z.B. durch punktweise Berechnung entlang einer gedachten vertikalen Mittellinie einer Verbundglasscheibe und eventueller Interpolation ein Kompensationskeilwinkelprofil $\delta$ bestimmt werden. Nach Bestimmung des Kompensationskeilwinkelprofils kann eine entsprechende Zwischenschicht F hergestellt werden.

In Bezug auf Head-Up Displays entsteht ein dem Phänomen der Doppelbilder ähnliches Problem, dass als Geisterbild bezeichnet wird.

In Figur 2 ist der prinzipielle Zusammenhang der Entstehung von Geisterbildern in Reflektion an Hand eines Strahlenbildes dargestellt. Dabei wird eine gebogene Glas-Scheibe 1 angenommen. Die gebogene Glas-Scheibe 1 weist am Ort des Eintritts eines Strahles in die gebogene Glas-Scheibe 1 einen Krümmungsradius R auf. Von einer Lichtquelle 3, welche repräsentativ für ein Head-Up-Display HUD steht, wird nun Licht ausgestrahlt. Dieses Licht trifft entlang des Strahls $R_i$ von innen unter einem Winkel O auf die Glas-Scheibe 1 und wird dort unter demselben Winkel $\Theta$ wieder reflektiert. Der reflektierte Strahl $R_r$ trifft in das Auge 2 eines Betrachters. Dieser Strahlengang ist als durchgezogene Linie dargestellt. Aus der Sicht des Betrachters scheint die Lichtquelle 3 virtuell am Ort 3', d.h. vor der Glas-Scheibe 1, befindlich zu sein. Dies ist als Strahl $R_v$ dargestellt. Neben diesem ersten Stahl trifft ein weiterer Strahl in das Auge 2 des Betrachters. Dieser Strahl $R'_i$ stammt ebenfalls von der Lichtquelle 3. Allerdings dringt dieser Strahl $R'_i$ gemäß den bekannten Brechungsgesetzen in die Glas-Scheibe 1 an der inneren Grenzfläche Luft/Glas ein und wird an der äußeren Grenzfläche Glas/Luft reflektiert, bevor der Strahl nun durch die innere Grenzfläche tritt und als Strahl $R'_r$ in das Auge 2 des Betrachters trifft. Die innere Grenzfläche bezeichnet somit die Grenzfläche, die näher zum Betrachter befindlich ist, während die äußere Grenzfläche die Grenzfläche bezeichnet, die weiter entfernt vom Betrachter ist. Dieser Strahlengang ist als gestrichelte Linie dargestellt. Aus der Sicht des Betrachters scheint die Lichtquelle 3 virtuell auch am Ort 3", d.h. ebenfalls vor der Glas-Scheibe 1, befindlich zu sein. Dies ist als Strahl $R'_v$ dargestellt.

Um diesem Problem zu begegnen, kann nun der Keilwinkel so geändert werden, dass der an der äußeren Grenzfläche reflektierte Strahl $R'_r$ als auch der an der inneren Grenzfläche reflektierte Strahl $R_r$ in Bezug auf das Auge 2 des Betrachters sich überlagern, d.h. der an der äußeren Grenzfläche reflektierte Strahl tritt an der Stelle der Reflektion des an der inneren Grenzfläche auftreffenden Strahls aus.

Wird dies nur für eine einzige Augposition durchgeführt, so kann der hieraus ermittelte Keilwinkel jedoch zu nicht optimalen Ergebnissen führen. Dies ist unter anderem dadurch zu erklären, dass sowohl die Körpergrößen von Fahrern, für die die Head-Up-Displays primär bestimmt sind, als auch die Sitzposition sehr unterschiedlich sind, sodass es eine Vielzahl möglicher Augposition gibt. Das führt dazu, dass sich das virtuelle Display abhängig von der Augposition an unterschiedlichen Stellen befindet und entsprechend ergibt sich für jede dieser Augpositionen ein unter Umständen anderer Wert für einen optimierten Keilwinkel. Zudem führt ein Keilwinkel ausschließlich optimiert für Geisterbilder in aller Regel zu einer Überkompensation von Doppelbildern, sodass die hierdurch hervorgerufenen Doppelbilder wiederum problematisch in Bezug auf die Wahrnehmung des Betrachters und/oder die Einhaltung gesetzlicher Prüfvorschriften und/oder die Einhaltung von Kundenspezifikationen in Bezug auf Doppelbilder sind.

Keilwinkelprofile, die sowohl die unterschiedlichen Augpositionen berücksichtigen, also auch die Kompensation von Doppelbildern im HUD-Bereich sind in horizontaler als auch in vertikaler Richtung nicht konstant. Die sich daraus ergebenden Dickenprofile für die Zwischenschicht F sind über einfache Extrusionsverfahren nicht herstellbar.

In Figur 4 ist ein Bereich einer erfindungsgemäßen thermoplastischen Kombinationsfolie F im Querschnitt gezeigt. Die Kombinationsfolie F besteht aus zwei Teilen: der ersten thermoplastischen Folie F1 und der zweiten Folie F2. Die erste thermoplastische Folie besteht im Beispiel aus PVB mit einer konstanten Dicke h1 von 0,76 mm und die zweite Folie F2 besteht ebenfalls aus PVB, allerdings variiert die Dicke innerhalb des festgelegten Bereichs K, wobei die maximale Dicke, $h_{max}$ der zweiten thermoplastischen Folie 0,18 mm beträgt. Der Wert $h_{max}$ wird an der Stelle gemessen, an der die zweite thermoplastische Folie F2 am dicksten ist. Im festgelegten Bereich steigt der Keilwinkel im ersten Grenzbereich g1 zunächst langsam an und nimmt dann in einem zentralen Bereich entsprechend eines zuvor optimierten Profils zu. Anschließend nimmt der Keilwinkel in einem zweiten Grenzbereich g2 langsam wieder ab, um den Übergang zur ersten thermoplastischen Folie F1 möglichst wenig sichtbar zu gestalten. Diese Anordnung mit zwei Grenzbereichen mit langsam steigendem bzw. fallendem Keilwinkel oben und unten bzw. rechts und links in Bezug auf eine eingebaute Windschutzscheibe ist besonders vorteilhaft, um die optische Beeinträchtigung am Übergang von erster thermoplastischer Folie zu zweiter thermoplastischer Folie minimal zu gestalten.

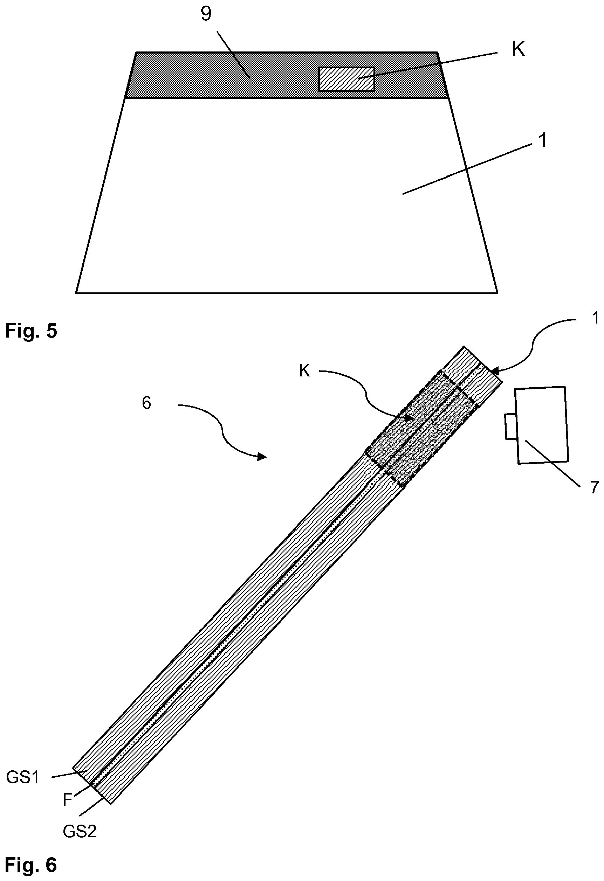

In Figur 5 ist eine Aufsicht auf eine Verbundglasscheibe 1 gezeigt. Die Verbundglasscheibe ist als Windschutzscheibe eines Personenkraftwagens vorgesehen. Die obere Kante in der Zeichnung grenzt im Kraftwagen an die Dachkante und die untere Kante an die Motorraumkante. Im oberen Drittel der Verbundglasscheibe außerhalb des Durchsichtbereichs ist ein Kamerafenster K angeordnet. Die Windschutzscheibe weist im oberen Randbereich bevorzugt einen Abdeckdruck 9 auf. Abdeckdrucke sind für Fahrzeugscheiben außerhalb des zentralen Sichtbereichs üblich, um Anbauteile zu verdecken oder den Klebstoff, mit dem die Fahrzeugscheibe mit der Karosserie verbunden ist, vor UV-Strahlung zu schützen. Der Abdeckdruck besteht typischerweise aus einem im Siebdruckverfahren aufgebrachten und eingebrannten schwarzen oder dunklen Emaille. Im Beispiel umrahmt der Abdeckdruck 9 das Kamerafenster K der Fahrzeugscheibe umlaufend, um die dahinterliegende Kamera zu verdecken. Die Verbundglasscheibe besteht aus zwei Glasschichten, GS1 und GS2, und einer thermoplastischen Kombinationsfolie F, die zwischen diesen Glasschichten angeordnet ist. Die Glasschichten GS1 und GS2 bestehen aus Kalk-Natron-Glas und haben eine Dicke von 2,1 mm. Die thermoplastische Kombinationsfolie F ist ausgebildet wie in Figur 4 beschrieben. Der festgelegte Bereich K bildet das Kamerafenster.

In Figur 6 ist eine mögliche Kamera-Anordnung 6 aus der beschriebenen Verbundglasscheibe 1 und einer Kamera 7 gezeigt. Die Glasschicht GS1 der Verbundglasscheibe 1 ist zur Außenseite des Kraftwagens gerichtet und die Glasschicht GS2 zur Innenseite. Die Kamera 7 ist im Innenraum des Fahrzeugs angeordnet und nimmt die Lichtstrahlen auf, die von au-ßen nach innen durch die Verbundglasscheibe 1 einfallen. Die Kamera ist auf den festgelegten Bereich gerichtet; das bedeutet, sie ist so montiert, dass die Lichtstrahlen durch den Bereich mit dem optimierten Keilwinkelprofil einfallen. So können die Doppelbilder in Transmission effizient verringert werden. Dies kann zum Beispiel erfolgreich im Bereich der Fahrspurassistenzsysteme eingesetzt werden.

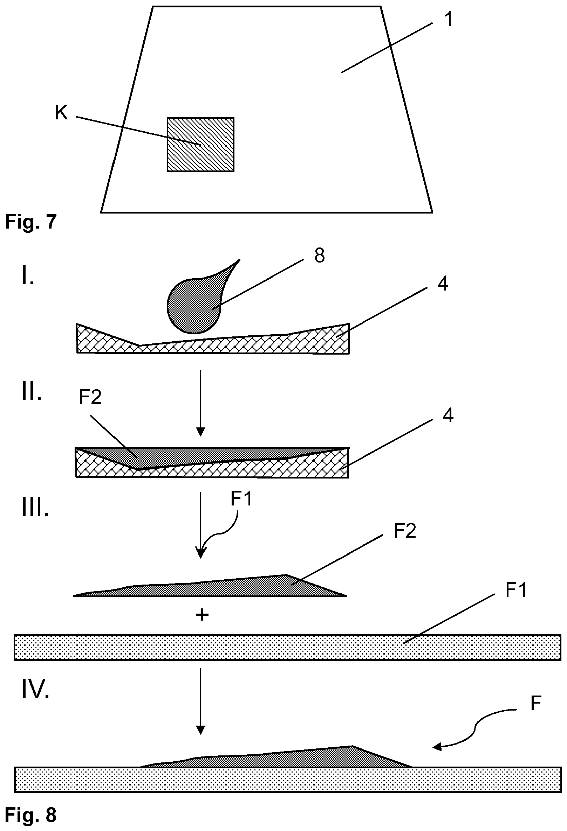

In Figur 7 ist eine Aufsicht auf eine Verbundglasscheibe 1 mit einem HUD-Bereich gezeigt. Der HUD-Bereich befindet sich im festgelegten Bereich, in dem ein optimiertes Keilwinkelprofil zur Vermeidung von Geisterbildern und Doppelbildern angeordnet ist. Der HUD-Bereich befindet sich im gezeigten Beispiel auf der linken Seite der Windschutzscheibe im Durchsichtbereich. Bei der Herstellung der Verbundglasscheibe 1 aus Glasschicht GS1, Glasschicht GS2 und erfindungsgemäßer thermoplastischer Kombinationsfolie F, kann dieses Design leicht für einen Rechtslenker angepasst werden, indem eine zweite thermoplastische Folie F2 mit optimiertem Keilwinkelprofil auf der rechten Seite platziert wird.

In Figur 8 ist beispielhaft ein Verfahrensablauf dargestellt, welcher in den Patentansprüchen nicht beansprucht ist. Dabei wird im I. Schritt eine Polymerschmelze 8 erhalten. Bei einem Spritzgussverfahren wird das Polymergranulat zum Beispiel in einem Schneckenextruder unter erhöhtem Druck erwärmt und dann die erhaltene Polymerschmelze 8 unter erhöhtem Druck durch eine Düse in das Formwerkzeug 4 gespritzt. Alternativ wird die Polymerschmelze 8 bei Atmosphärendruck in das Formwerkzeug 4 eingebracht. Die Polymerschmelze 8 erstarrt in dem Formwerkzeug 4 und nimmt die Form des Formwerkzeugs 4 an (Schritt II), sodass die zweite thermoplastische Folie F2 im III. Schritt aus dem Formwerkzeug 4 gelöst werden kann. Das Formwerkzeug 4 ist bevorzugt mit Teflon beschichtet, um das Herauslösen der dünnen zweiten thermoplastischen Folie F2 zu erleichtern. Die erste thermoplastische Folie F1 mit konstanter Dicke wird bereitgestellt. Die zweite thermoplastische Folie F2 wird auf die erste thermoplastische Folie F1 aufgelegt und mit der ersten thermoplastischen Folie F1 verschweißt.

**Bezugszeichenliste**

| | |
|---|---|
| GS1 | Glasschicht 1, erste Glasschicht, erste Glasscheibe |
| GS2 | Glasschicht 2, zweite Glasschicht, zweite Glasscheibe |
| F | Thermoplastische Kombinationsfolie, Keilförmige Zwischenschicht, |
| K | Festgelegter Bereich |
| F1 | Erste thermoplastische Folie |
| F2 | Zweite thermoplastische Folie |
| g1 | erster Grenzbereich |
| g2 | zweiter Grenzbereich |
| h1 | Dicke der ersten thermoplastischen Folie |
| $h_{max}$ | maximale Dicke der zweiten thermoplastischen Folie |
| 1 | Glasscheibe |
| 2 | Auge |
| 3 | Lichtquelle, HUD-Projektor |
| 4 | Formwerkzeug |
| 5 | HUD-Anordnung |
| 6 | Kamera-Anordnung |
| 7 | Kamera |
| 8 | Polymerschmelze |
| 9 | Abdeckdruck |

**Patentansprüche**

1. Verfahren zur Herstellung einer thermoplastischen Kombinationsfolie (F) geeignet für eine Verbundglasscheibe (1), wobei die thermoplastische Kombinationsfolie (F) mindestens einen festgelegten Bereich (K) umfasst, der für ein Kamerafenster oder einen HUD-(Head-UP Display) Bereich vorgesehen ist, der einen sich ändernden Keilwinkel aufweist, das Verfahren mindestens umfassend die Schritte:

   - Bereitstellen einer ersten thermoplastischen Folie (F1),
   - Herstellen einer zweiten thermoplastischen Folie (F2) mit einem sich ändernden Keilwinkel, wobei die dreidimensionale Form der zweiten thermoplastischen Folie (F2) durch Anformen an ein Formwerkzeug (4) erhalten wird, und
   - Aneinanderfügen der ersten thermoplastischen Folie (F1) und der zweiten thermoplastischen Folie (F2),

   wobei die Schritte des Aneinanderfügens der ersten thermoplastischen Folie (F1) und der zweiten thermoplastischen Folie (F2) und des Herstellens der zweiten thermoplastischen Folie (F2) gleichzeitig erfolgen.

2. Verfahren nach Anspruch 1, wobei die erste thermoplastische Folie (F1) eine konstante Dicke h1 aufweist.

3. Verfahren nach einem der Ansprüche 1 bis 2, wobei die erste thermoplastische Folie (F1) und die zweite thermoplastische Folie (F2) zumindest einen Stoff ausgewählt aus der Gruppe, bestehend aus Polyvinylbutyral (PVB), Ethylenvinylacetat (EVA), Polyethylenterephthalat (PET), Polyurethan (PU), Polypropylen (PP), Polyacrylat, Polyethylen (PE), Polycarbonat (PC), Polymethylmethacrylat, Polyvinylchlorid, Polyacetalharzen, Gießharzen, Polyacrylaten, fluorierten Ethylen-Propylen-Copolymerisaten, Polyvinylfluorid, Ethylen-Tetrafluorethylen-Copolymerisaten sowie Copolymeren und Gemischen, enthalten.

4. Verfahren nach Anspruch 3, wobei die erste thermoplastische Folie (F1) im Wesentlichen aus PVB besteht.

5. Verfahren nach Anspruch 1, wobei die zweite thermoplastische Folie (F2) an die erste thermoplastische Folie (F1) angespritzt wird oder angegossen wird.

6. Verfahren nach einem der Ansprüche 1 bis 5, wobei die zweite thermoplastische Folie (F2) sich nur über den festgelegten Bereich (K) erstreckt.

## Claims

1. Method for producing a thermoplastic combination film (F) suitable for a composite glass pane (1), wherein the thermoplastic combination film (F) comprises at least one defined area (K), which is provided for a camera window or an HUD (head-up display) region that has a variable wedge angle, the method at least comprising the steps:

   - providing a first thermoplastic film (F1),
   - producing a second thermoplastic film (F2) with a variable wedge angle, wherein the three-dimensional shape of the second thermoplastic film (F2) is obtained by molding on a mold (4), and
   - joining together the first thermoplastic film (F1) and the second thermoplastic film (F2),

   wherein the steps of joining together the first thermoplastic film (F1) and the second thermoplastic film (F2) and of producing the second thermoplastic film (F2) are done simultaneously.

2. Method according to claim 1, wherein the first thermoplastic film (F1) has a constant thickness h1.

3. Method according to any one of claims 1 through 2, wherein the first thermoplastic film (F1) and the second thermoplastic film (F2) contain at least one material selected from the group consisting of polyvinyl butyral (PVB), ethylene vinyl acetate (EVA), polyethylene terephthalate (PET), polyurethane (PU), polypropylene (PP), polyacrylate, polyethylene (PE), polycarbonate (PC), polymethyl methacrylate, polyvinyl chloride, polyacetal resins, casting resins, polyacrylates, fluorinated ethylene propylene copolymers, polyvinyl fluoride, ethylene tetrafluoroethylene copolymers, as well as copolymers and mixtures.

4. Method according to claim 3, wherein the first thermoplastic film (F1) is made substantially of PVB.

5. Method according to claim 1, wherein the second thermoplastic film (F2) is injection molded or cast onto the first thermoplastic film (F1).

6. The method according to any one of claims 1 to 5, wherein the second thermoplastic film (F2) extends only over the specified area (K).

## Revendications

1. Procédé de fabrication d'un film thermoplastique combiné (F) adapté à une vitre composite (1), dans lequel le film thermoplastique combiné (F) comprend au moins une zone définie (K), qui est prévue pour une fenêtre de caméra ou une zone HUD (affichage tête haute) qui a un angle de calage variable, le procédé comprenant au moins les étapes :

   - fournir un premier film thermoplastique (F1),
   - produire un deuxième film thermoplastique (F2) avec un angle de calage variable, la forme tridimensionnelle du deuxième film thermoplastique (F2) étant obtenue par moulage sur un moule (4), et
   - l'assemblage du premier film thermoplastique (F1) et du second film thermoplastique (F2),

   les étapes consistant à assembler le premier film thermoplastique (F1) et le second film thermoplastique (F2) et à produire le second film thermoplastique (F2) étant effectuées simultanément.

2. Procédé selon la revendication 1, dans lequel le premier film thermoplastique (F1) a une épaisseur constante h1.

3. Procédé selon l'une quelconque des revendications 1 à 2, dans lequel le premier film thermoplastique (F1) et le second film thermoplastique (F2) contiennent au moins un matériau choisi dans le groupe constitué par le butyral de polyvinyle (PVB), l'éthylène-acétate de vinyle (EVA), le polyéthylène téréphtalate (PET), le polyuréthane (PU), le polypropylène (PP), le polypropylène (PP), le polypropylène (PP), le polypropylène (PP), le polypropylène (PP) et le polypropylène (PP), polypropylène (PP), polyacrylate, polyéthylène (PE), polycarbonate (PC), polyméthacrylate de méthyle, chlorure de polyvinyle, résines polyacétales, résines de coulée, polyacrylates, copolymères fluorés d'éthylène et de propylène, fluorure de polyvinyle, copolymères d'éthylène et de tétrafluoroéthylène, ainsi que les copolymères et les mélanges.

4. Procédé selon la revendication 3, dans lequel le premier film thermoplastique (F1) est constitué essentiellement de PVB.

5. Procédé selon la revendication 1, dans lequel le second film thermoplastique (F2) est moulé par injection ou coulé sur le premier film thermoplastique (F1).

6. Procédé selon l'une quelconque des revendications 1 à 5, dans lequel le second film thermoplastique (F2) ne s'étend que sur la zone spécifiée (K).

**Fig. 1**

**Fig. 2**

1

GS1    F    GS2

**Fig. 3**

F    F2    $h_{max}$    F1    h1

K

g1    g2

**Fig. 4**

**Fig. 5**

**Fig. 6**

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015086234 A1
- WO 2015086233 A1
- WO 2009071135 A1
- US 8451541 B2
- US 7060343 B2
- US 6881472 B2
- US 6636370 B2
- US 5013134 A

- DE 19611483 A1
- DE 19535053 A1
- EP 0647329 B1
- EP 1063205 B1
- EP 2883693 A1
- EP 1593656 A1
- US 2016168353 A1

**In der Beschreibung aufgeführte Nicht-Patentliteratur**

- **NACH J. P. ACLOCQUE.** Doppelbilder als störender optischer Fehler der Windschutzscheibe. *Z. Glastechn. Ber.,* 1970, vol. 193, 193-198